Europäisches Patentamt

European Patent Office

Office européen des brevets

(19)

(11) Veröffentlichungsnummer: **0 069 230**
**B1**

(12) **EUROPÄISCHE PATENTSCHRIFT**

(45) Veröffentlichungstag der Patentschrift: 29.07.87

(51) Int. Cl.⁴: **B 23 Q 3/08**

(21) Anmeldenummer: 82104695.0

(22) Anmeldetag: 28.05.82

(54) Verfahren zum Spannen von Werkstücken sowie Vorrichtung zur Durchführung des Verfahrens.

(30) Priorität: 07.07.81 DE 3126720

(43) Veröffentlichungstag der Anmeldung:
12.01.83 Patentblatt 83/02

(45) Bekanntmachung des Hinweises auf die
Patenterteilung:
29.07.87 Patentblatt 87/31

(84) Benannte Vertragsstaaten:
FR GB IT NL

(56) Entgegenhaltungen:
FR-A-2 083 018
GB-A- 120 697
US-A-2 701 723
US-A-3 253 665
US-A-3 681 834
US-A-4 058 885

MACHINERY, Band 80, März 1952, Seite 451,
Brighton, GB. B. SPECTOR: "Vacuum chuck for
holding and ejecting thin discs"

(73) Patentinhaber: Messerschmitt-Bölkow-Blohm
Gesellschaft mit beschränkter Haftung
Robert-Koch-Strasse
D-8012 Ottobrunn (DE)

(72) Erfinder: Eickhorst, Helmut
Grashof 17
CH-2930 Varel (CH)

Courier Press, Leamington Spa, England.

Beschreibung

Die Erfindung bezieht sich auf ein Verfahren und eine Vorrichtung zum Spannen von Werkstücken, insbesondere von großflächigen Werkstücken geringer Wandstärke, bei dem das zu bearbeitende Werkstück durch Unterdruck-Spanneinheiten gehalten wird.

Bei der Bearbeitung von großformatigen ebenen Werkstücken, insbesondere beim Umrißfräsen, ist es bekannt, diese Werkstücke in der Weise zu spannen, daß zusätzlich zu den eigentlichen Werkstückeaufnahmen an diskreten Unterstützungspunkten Unterdruck-Spanneinheiten, sogenannte Vakuum-Pendelstützen, aufgestellt werden, die an dem jeweils zu berbeitenden Werkstück anliegen. Durch Verbinden der Spanneinheiten mit dem Unterdruck-System wird das Werkstück von den Pendelstützen zusätzlich gehalten, wodurch Vibrationen des Werkstückes bei der Bearbeitung verhindert werden.

Bei der Bearbeitung von sphärisch vorverformten dünnwandigen Blechteilen, wie beispielsweise Beplankungsblechen von Flugzeugen, ergibt sich die Forderung, daß die Auflagepunkte eines solchen Werkstückes während seiner Bearbeitung exakt mit der Formgebung des Werkstückes übereinstimmen müssen, um lokale Verformungen des Werkstückes zu vermeiden. In diesem Zusammenhang ist es bekannt, das zu bearbeitende Werkstück auf Konturschablonen aufzulegen und auf diesen entweder mittels mechanischer Spannelemente oder aber mittels Unterdruck zu spannen. Da die Konturschablonen dabei jeweils typengebunden, d.h. nur für ein bestimmtes Bauteil passend, ausgelegt sein müssen, resultiert aus diesem bekannten Spannverfahren ein erheblicher Aufwand hinsichtlich der Anfertigung und der Lagerung derartiger Konturschablonen.

Es ist zwar nach der US—A—3.681.834 bekannt, eine Unterdruck-Spannplatte in einem kugeligen Sitz pendelnd zu haltern und an ein zu bearbeitendes Werkstück anzusetzen sowie dann mittels Unterdruck zu blockieren. Hierbei besteht der Mangel, daß die Spannplatte in Abhängigkeit vom zu bearbeitenden Werkstück verschiedenartig ausgebildet ist und somit entsprechend auswechselbar sein muß.

Der Erfindung liegt daher die Aufgabe zugrunde, ein Spannverfahren und eine Vorrichtung bereitzustellen, die es auf einfache Weise gestatten, auch große, gegebenenfalls sphärisch vorverformte Blechteile für die weitere Bearbeitung zu spannen. Dabei soll dieses Verfahren einerseits eine möglichst leichte Handhabung des zu spannenden Werkstückes gestatten und andererseits einen möglichst geringen Aufwand hinsichtlich der zu seiner Durchführung benötigten Vorrichtungen erfordern.

Die Aufgabe zur Durchführung des Verfahrens wird durch die kennzeichnenden Merkmale des Anspruchs 1 gelöst. Vorteilhafte Weiterbildungen des erfindungsgemäßen Verfahrens sind in den Unteransprüchen 2 bis 9 angegeben, wobei sich die Ansprüche 4 bis 9 insbesondere auf die Bearbeitung von sphärisch, beispielsweise durch Streckziehen, vorverformten dünnwandigen Bleche beziehen.

Die Lösung für eine Vorrichtung wird erfindungsgemäß durch die kennzeichnenden Merkmale des Anspruchs 10 gelöst. Der Anwendungsbereich, der erfindungsgemäßen Vorrichtung ist dabei nicht auf das vorstehend in erster Linie diskutierte Spannen von relativ nachgiebigen, großformatigen Bauteilen beschränkt, sondern umfaßt selbstverständlich auch andere Bauteile, die für ein Spannen mittels Unterdruck-Saugelementen geeignet sind. Auch ist die erfindungsgemäße Vorrichtung dabei nicht an die Erzeugung von Luftkissen während des Aufbringens und Abnehmens des zu bearbeitenden Werkstückes gebunden, sondern kann auch bei der herkömmlichen Verfahrensweise eingesetzt werden.

Die in den Ansprüchen 11 bis 22 in weiterer Ausgestaltung der erfindungsgemäßen Vorrichtung aufgeführten Merkmale dienen zum einen der weiteren Optimierungen dieser Vorrichtung hinsichtlich Aufbau und Funktionsweise, zum anderen dienen sie der weitgehenden Automatisierung des Spannvorgangs. Da die von den einzelnen Spannelementen gebildeten theoretischen Auflagepunkte für das Werkstück auch bei etwaigen Schwenkbewegungen ihre Position im Raum beibehalten, passen sich die Spannelemente, in ihrer jeweiligen Halterung pendelnd, durch Neigen der äußeren Kontur des Werkstücks an. Das Problem der exakten Einstellung der Spanneinheiten stellt somit lediglich ein dreiachsiges dar, so daß sich sämtliche Spanneinheiten schon vor dem Aufbringen des Werkstücks exakt einstellen lassen. Dies kann dadurch geschehen, daß die Spanneinheiten so positioniert werden, daß die von den Spannelementen gebildeten Auflagepunkte exakt denjenigen Koordinaten entsprechen, die bei der konstruktiven Entwicklung des Werkstückes vorgegeben werden.

Zwar ist in der US—A—3 681 834 bereits eine Spanneinheit gemäß dem Oberbegriff des Anspruches 10 beschreiben, jedoch gestattet diese bekannte Vorrichtung weder die automatische Aufnahme unterschiedlich vorverformter Werkstücke in einer beliebigen Reihenfolge noch ist bei dieser Anordnung die Erzeugung eines Luftkissens sowohl zum leichteren Aufbringen der zu bearbeitenden Werkstücke als auch zum selbsttätigen Anpassen der Neigung des Spannelementes an die Außenkontur des Werkstückes vorgesehen.

Im folgenden soll die Erfindung anhand der Zeichnung näher erläutert werden. Es zeigen:

Fig. 1 eine Schnittdarstellung eines Ausführungsbeispiels der erfindungsgemäßen Vorrichtung und

Fig. 2 einen Schnitt durch eine Anordnung zur Durchführung des erfindungsgemäßen Verfahrens unter Verwendung von Vorrichtungen entsprechend Fig. 1.

In den Figuren sind gleiche bzw. entsprechende Bauteile mit den gleichen Bezugszeichen versehen.

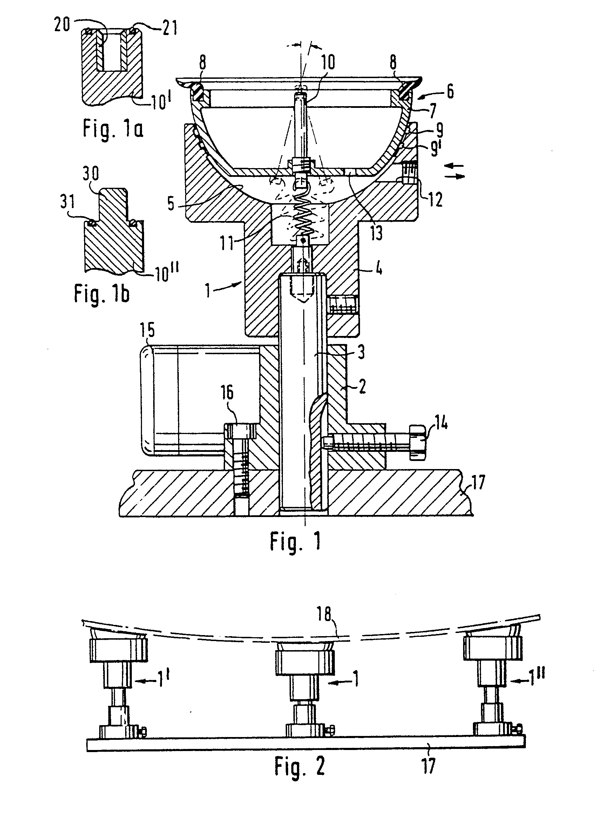

Die in Fig. 1 dargestellte Spanneinheit 1 besteht zunächst aus einem Fußteil 2, einem in diesem in horizontaler Richtung gleitend verschieblich gehaltenen Tragzapfen 3 sowie einem auf letzterem angeordneten Kopfteil 4. Letzteres weist auf seiner Oberseite eine kaeottenförmige Ausnehmung 5 auf, in der ein Unterdruck-Spannelement 6 beweglich gelagert ist. Das Spannelement 6 wird gebildet von einer Aufnahme 7 in Form einer Halbkugelschale, deren Unterseite im Fall des hier dargestellten Ausführungsbeispiels der Erfindung abgeflacht ist. Der Radius der Halbkugel ist dabei dem Radius der Ausnehmung 5 angepaßt. Auf der Oberseite erstreckt sich die im vorliegenden Fall aus einem metallischen Werkstoff hergestellte Aufnahme 7 nicht ganz bis zum gedachten Kugeläquator, sondern endet in geringem Abstand von diesem. Vervollständigt wird die Halbkugel von einem auf der Oberseite in den Rand der Aufnahme 7 eingelegten Dichtring 8.

Im oberen Randbereich des Kopfteils 4, an dem die Aufnahme 7 anliegt, sind zwei umlaufende Ringnuten 9, 9' vorgesehen. Ferner ist im Inneren der nach oben offenen Aufnahme 7 ein Stift 10 angeordnet, der sich bis zum Kugelzentrum erstreckt und der den theoretischen Auflagepunkt der Spanneinheit 1 bildet.

Dieser Stift 10 kann entweder fest im Boden der Aufnahme 7 angeordnet oder, wie im Fall des hier gezeigten Ausführungsbeispiels, in einer Gewindebohrung höhenverstellbar gehalten sein. Die Höhenverstellbarkeit gewährleistet dabei, daß Bauteile mit unterschiedlich starker Wolbung stets sowohl auf der Dichtung 8 als auch zugleich auf dem Stift 10, dem theoretischen Auflagepunkt, aufliegen.

Der Stift 10 kann zugleich auch als Fixpunkt für die lagegenaue Anordnung des zu bearbeitenden Werkstücks dienen, sofern dieses mit entsprechenden Paßbohrungen versehen ist. Zu diesem Zweck kann gemäß Fig. 1 a ein Stift 10' verwendet werden, der in einer an seinem oberen Ende vorgesehenen Bohrung eine Paßbuchse 20 trägt und in dessen Stirnfläche zusätzlich ein Dichtring 21 eingelegt ist. Die Paßbuchse 20 dient dabei zur Aufnahme eines geeigneten Paßstiftes, der durch die entsprechende Paßbohrung des Werkstücks greift und damit seine Position festlegt. Es kann aber auch, wie in Fig. 1b gezeigt, ein Stift 10" verwendet werden, dessen dem Werkstück zugewandtes Ende einen als Paßstift ausgebildeten Ansatz 30 trägt, wobei auch in diesem Fall die Stirnfläche mit einem Dichtring 31 versehen ist. Im letzgenannten Fall ist der Stift 10" vorteilhafterweise elastisch am Boden der Aufnahme 7 gehaltert, so daß er durch das Werkstück unter das Niveau der Dichtung 8 niederdrückbar ist.

Der Boden der Aufnahme 7 wird über eine Zugfeder 11 elastisch im Kopfteil 4 angelenkt. Diese Zugfeder 11, die entweder an dem aus dem Boden der Aufnahme 7 herausragenden Ende des Stiftes 10 (wie in Fig. 1) oder aber an einer geeigneten separater Öse der Aufnahme 7 ange

lenkt sein kann, wirkt bei einer Auslenkung des Spannelements 6 aus seiner in Fig. 1 dargestellten Ruhelage, in der die Auflagefläche symmetrisch zum Tragzapfen 3 liegt, als Rückstellelement. Letzteres ist insbesondere dann wichtig, wenn die erfindungsgemäße Spanneinheit nicht, wie in Fig. 1 dargestellt, auf einer horizontalen Unterlage angeordnet ist, sondern beispielsweise an einer senkrecht stehenden Unterlage.

Eine Durchgangsbohrung 12 verbindet die Ausnehmung 5 des Kopfteils 4 wahlweise mit einem Unterdruck-System oder einem Drucklufterzeuger. Eine weitere Durchgangsbohrung 13 ist in der Bodenfläche des Spannelements 6 angebracht. Weitere Einzelheiten der Anordnung bilden eine Stellschraube 14 zur manuellen Verstellung bzw. Arretierung des Tragzapfens 3 oder eine — hier nur gestrichelt angedeutete, da optional vorgesehene — selbsttätige Stelleinrichtung 15. Letztere bewirkt auf elektrischem, hydraulischen oder pneumatischem Weg eine Änderung der Ausfahrhöhe des Tragzapfens 3. Zusätzlich kann dabei in die Stelleinrichtung noch eine Einrichtung zur Messung dieser Ausfahrhöhe sowie gegebenenfalls eine Steuereinrichtung zur automatischen Voreinstellung der Z-Koordinate des durch die Spanneinheit gebildeten Auflagepunktes integriert sein. Ferner kann — zur Feineinstellung der Ausfahrhöhe nach dem Aufliegen des Werkstücks — im Stift 10 noch ein Näherungssensor vorgesehen sein.

Schließlich sei noch angemerkt, daß im Fall des hier dargestellten Ausführungsbeispiels das Fußteil so ausgebildet ist, daß es mittels geeigneter Paßschrauben 16 in einer Rasterplatte 17 exakt positionierbar ist.

Das erfindungsgemäße Verfahren sowie die Wirkungsweise der vorstehend beschriebenen Anordnung sollen nachfolgend anhand von Fig. 2 erläutert werden.

Auf einer zu einer Bearbeitungseinrichtung gehörenden Grundplatte oder einem Maschinentisch, im vorliegenden Fall einer Rasterplatte 17, werden an vorgewählten Unterstützungspunkten Spanneinheiten 1, 1', 1" in exakt definierten Positionen angeordnet. Zur Bearbeitung, z. B. zum Umriß-fräsen oder Bohren, eines beispielsweise durch Streckziehen vorverformten Werkstücks in Form eines Beplankungsbleches 18 werden die Tragzapfen der einzelnen Spanneinheiten, entweder von Hand oder automatisch gesteuert, so weit ausgefahren, daß die von den Spannelementen der Spanneinheiten, d. h. den Kugelzentren der jeweiligen Aufnahmen, gebildeten theoretischen Auflagepunkte für das Werkstück in allen drei Koordinatenrichtungen exakt mit den entsprechenden Koordinatenpunkten des Werkstücks übereinstimmen. Dadurch wird das Werkstück ohne Verformung von den Spanneinheiten abgestützt.

Die gegenseitigen Abstände der Spanneinheiten sind dabei in Abhängigkeit von Gewicht, Materialstärke und Festigkeitseigenschaften des zu bearbeitenden Werkstücks so gewählt, daß das Werkstück hinreichend abgestützt wird, um vor einer Verformung infolge Durchhängens geschützt zu sein, daß es genügend fest gespannt werden kann und daß schließlich ein möglichst freier Zugang für die eigentliche Bearbeitung bewahrt bleibt.

Zum Aufbringen des Werkstücks auf die Anordnung werden zunächst die einzelnen Spanneinheiten mit einem Drucklufterzeuger verbunden. Dadurch werden auf der geöffneten Außenseite der Aufnahmen der einzelnen Spannelemente Luftkissen erzeugt, auf denen das Werkstück gleitet und in seine vorgesehene Position gebracht werden kann. Darüber hinaus wird dadurch, daß jeweils ein Teil der Druckluft auch durch den Raum zwischen dem Kopfteil und dem zugehörigen Spannelement ins Freie tritt, bewirkt, daß die Spannelemente in den Kopfteile zu gleiten vermögen und sich unter der Last des Werkstücks so einstellen, daß sie so eng wie möglich am Werkstück anliegen und eine optimale Dichtwirkung zwischen Werkstück und Aufnahme erzielt wird.

Sobald das Werkstück seine vorgesehe Position erreicht hat, wobei etwaig als Paßstifte ausgebildete Stife 10″ in die entsprechend vorgesehenen Fixierbohrungen des Werkstücks greifen bzw. Paßstifte in entsprechende Buchsen 20 von Stiften 10′ eingesetzt werden, wird die Verbindung zum Drucklufterzeuger unterbrochen und die Spanneinheiten werden mit einem Unterdrucksystem verbunden. Dadurch wird das Werkstück an den Spanneinheiten festgehalten und kann nunmehr bearbeitet werden.

Nach der Bearbeitung wird ein Druckausgleich hergestellt, wodurch das Werkstück freigegeben wird und wieder entnommen werden kann. Um die Entnahme des Werkstücks zu erleichtern, können die Spanneinheiten erneut mit dem Drucklufterzeuger verbunden werden, so daß das Werkstück auf den dabei erzeugten Luftkissen zu gleiten vermag.

Angemerkt sie noch, daß es selbstverständlich auch möglich ist, anstelle der Durchgangsbohrung 12 im Kopfteil 4, die die Ausnehmung 5 mit dem Unterdruck- bzw. Druckluftsystem verbindet, eine entsprechende Durchgangsbohrung im Tragzapfen 3 vorzusehen, die dann über entsprechende Kanäle der Rasterplatte 17 mit dem Unterdruck- bzw. Druckluftsystem in Verbindung steht. In diesem Fall, der die Verwendung einer entsprechend ausgebildten Rasteplatte voraussetzt, entfallen sämtliche ansonsten oberhalb der Platte verlaufenden Druckschläuche.

## Patentansprüche

1. Verfahren zum Spannen von Werkstücken (18), insbesondere von großflächigen Werkstücken geringer Wandstärke, bei dem das zu bearbeitende Werkstück (18) durch Unterdruck-Spanneinheiten (1) gehalten wird, wobei mit den Verfahrensschritten

1) durch Ausblasen von Gas bzw. Druckluft aus Spanneinheiten (1) an diskreten Unterstützungspunkten jeweils Luftkissen erzeugt werden,

2) das zu spannende Werkstück (19) auf den Luftkissen gleitend in die vorgegebene Position geschoben wird,

3) das Werkstück (18) durch Abschalten der Druckluft auf die Spanneinheiten (1) abgesenkt wird,

4) das Werkstück (18) mittels Unterdruck auf den Spanneinheiten (1) gespannt wird.

2. Verfahren nach Anspruch 1, dadurch gekennzeichnet, daß zur Entnahme des Werkstücks (18) an den Spanneinheiten (1) erneut Luftkissen erzeugt werden.

3. Verfahren nach Anspruch 1 oder 2 dadurch gekennzeichnet, daß das Werkstück (18) in seiner Bearbeitungsposition zusätzlich durch Paßstifte (10) fixiert wird.

4. Verfahren nach einem der Ansprüche 1 bis 3, insbesondere zum Spannen von sphärisch vorverformten großformatigen Blechteilen, dadurch gekennzeichnet, daß die Spanneinheiten (1) vor dem Einbringen des zu bearbeitenden Werkstücks (18) so angeordnet werden, daß die Koordinaten der durch die Spanneinheiten (1) gebildeten theoretischen Auflagepunkte mit den konstruktiv vorgegebenen Konturkoordinaten des Werkstücks (18) übereinstimmen.

5. Verfahren nach Anspruch 4, dadurch gekennzeichnet, daß sich die Spannelemente (6) der Spanneinheiten (1) beim Einbringen des Werkstücks (18) selbsttätig an die Außenkontor des Werkstücks (18) anlegen.

6. Verfahren nach Anspruch 5, dadurch gekennzeichnet, daß das selbsttätige Ausrichten der Spannelemente (6) der Spanneinheiten (1) jeweils durch ein Luftkissen unterstützt wird.

7. Verfahren nach einem der Ansprüche 1 bis 6, dadurch gekennzeichnet, daß eine Voreinstellung der Z-Koordinaten der Spanneinheiten (1) mit Hilfe einer automatischen Steuerung erfolgt.

8. Verfahren nach Anspruch 7, dadurch gekennzeichnet, daß zusätzlich eine Feineinstellung der Z-Koordinate der Spanneinheiten (1) nach dem Einbringen des Werkstücks (18) mit Hilfe von Näherungssensoren vorgenommen wird.

9. Verfahren nach einem der Ansprüche 3 bis 8, dadurch gekennzeichnet, daß die Paßstifte (10) automatisch ausgefahren werden.

10. Vorrichtung zum Spannen von Werkstücken (18), insbesondere von großflächigen Werkstücken geringer Wandstärke, in Form einer höhenverstellbaren Unterdruck-Spanneinheit (1), bestehend aus einem Fußteil (2), einem in diesem verschieblich gehalterten Tragzapfen (3) sowie einem am oberen Ende des Tragzapfens (3) angeordneten Kopfteil (4), in dem ein mit einem kugeligen Sitz versehenes Spannelement (6) pendelnd gelagert ist, das mit einem Unterdruck-System pneumatisch verbunden ist, wobei ein zwischen dem Kopfteil (4) und dem Spannelement (6) befindlicher Raum mit einer Durchgangsbohrung (13) versehen ist und die dem Spannelement (6) zugewandte Innenfläche des Kopfteils (4) eine mit dem Unterdrucksystem verbindbare Bohrung (2) aufweist, dadurch gekennzeichnet, daß das Spannelement (6) angenähert die Form einer nach oben offenen Halbkugelschale aufweist.

11. Vorrichtung nach Anspruch 10, dadurch gekennzeichnet, daß die Unterseite der das Spannelement (6) bildenden Halbkugelschale einen abgeflachten Bereich aufweist.

12. Vorrichtung nach Anspruch 10 oder 11, dadurch gekennzeichnet, daß das Spannelement (6) elastisch am Boden des Kopfteils (4) gehaltert ist.

13. Vorrichtung nach einem der Ansprüche 10 bis 12, dadurch gekennzeichnet, daß die Unterseite des Spannelementes (6) mittels wenigstens einer Zugfeder (11) am Boden des Kopfteils (4) angelenkt ist.

14. Vorrichtung nach einem der Ansprüche 10 bis 13, dadurch gekennzeichnet, daß auf dem Außenrand der dem Werkstück (18) zugewandten Fläche des Spannelements (6) eine Dichtung (8) angebracht ist.

15. Vorrichtung nach einem der Ansprüche 11 bis 14, dadurch gekennzeichnet, daß in der Bodenfläche des Spannelementes (6) ein sich bis in etwa zum Kugelmittelpunkt erstreckender Stift (10) angeordnet ist.

16. Vorrichtung nach Anspruch 15, dadurch gekennzeichnet, daß der Stift (10) im Boden des Spannelements (6) höhenverstellbar gehaltert ist.

17. Vorrichtung nach Anspruch 16, dadurch gekennzeichnet, daß der Stift (10) an seinem oberen Ende mit einem Näherungssensor versehen ist.

18. Vorrichtung nach Anspruch 15 oder 16, dadurch gekennzeichnet, daß der Stift (10″) zugleich als Paßstift ausgebildet ist.

19. Vorrichtung nach Anspruch 15 oder 16, dadurch gekennzeichnet, daß der Stift (10′) an seinem oberen Ende mit einer Paßbuchse (20) versehen ist.

20. Vorrichtung nach einem der Ansprüche 10 bis 18, dadurch gekennzeichnet, daß der Tragzapfen (3) in vertikaler Richtung verschieblich gehaltert ist.

21. Vorrichtung nach Anspruch 20, dadurch gekennzeichnet, daß dem Tragzapfen (3) eine ansteuerbare selbsttätige Stelleinrichtung (15) zugeordnet ist.

22. Vorrichtung nach Anspruch 21, dadurch gekennzeichnet, daß die Stelleinrichtung (15) zusätzlich mit einer Einrichtung zur Messung der jeweils eingestellten Höhe versehen ist.

**Revendications**

1. Procédé pour fixer des pièces (18), notamment des pièces de grande surface et de faible épaisseur, procédé selon lequel la pièce (18) à usiner est maintenue par des éléments de fixation à dépression (1), procédé caractérisé en ce que:

1) on éjecte du gaz ou de l'air comprimé des unités de fixation (1) en des points d'appui distincts pour former chaque fois des coussins d'air,

2) on glisse la pièce à usiner (18) sur les coussins d'air pour la mettre dans la position prédéterminée,

3) on abaisse la pièce (18) en coupant l'air comprimé alimentant les unités de fixation (1),

4) on fixe la pièce (18) par dépression sur les unités de fixation (1).

2. Procédé selon la revendication 1, caractérisé en ce qu'on forme de nouveau des coussins d'air au niveau des unités de fixation (1) pour enlever la pièce (18).

3. Procédé selon la revendication 1 ou 2, caractérisé en ce qu'on fixe la pièce (18) dans sa position d'usinage de manière complémentaire par un goujon d'assemblage (10).

4. Procédé selon l'une des revendications 1 à 3 notamment pour fixer des pièces en tôle de grand format, déjà mises en forme sphérique, caractérisé en ce que les unités de fixation (1) sont disposées avant la mise en place de la pièce (18) à usiner pour que les coordonnées des points d'appui théoriques constitués par les unités de fixation (1) correspondent aux coordonnées de contour, prédéterminées sur le plan constructif de la pièce (18).

5. Procédé selon la revendication 4, caractérisé en ce que les éléments de fixation (6) des unités de fixation (1) s'appliquent automatiquement au contour extérieur de la pièce (18) lors de la mise en place de la pièce (18).

6. Procédé selon la revendication 5, caractérisé en ce que l'alignement automatique des éléments de fixation (6) des unités de fixation (1) est renforcé chaque fois par un coussin d'air.

7. Procédé selon l'une des revendications 1 à 6, caractérisé par un préréglage des coordonnées (Z) des unités de fixation (1) à l'aide d'une commande automatique.

8. Procédé selon la revendication 7, caractérisé en ce qu'en outre on effectue un réglage fin des coordonnées (Z) des unités de fixation (1) après la mise en place de la pièce (18) à l'aide de capteurs de proximité.

9. Procédé selon l'une des revendications 3 à 8, caractérisé en ce que les goujons d'assemblage (10) sont mis automatiquement en saillie.

10. Dispositif pour fixer des pièces (18), notamment des pièces de grande surface et de faible épaisseur, sous la forme d'une unité de fixation à dépression (1) réglable en hauteur composée d'un pied (2), d'un goujon de support (3) logé coulissant dans celui-ci ainsi que d'une tête (4) prévue à l'extrémité supérieure du goujon de support (3) qui reçoit de manière pendulaire un élément de fixation (6) muni d'un siège sphérique, élément relié de manière pneumatique à un système à dépression, le volume se trouvant entre la tête (4) et l'élément de fixation (6) étant muni d'un perçage traversant (13) et la surface intérieure de la tête (4) tournée vers l'élément de fixation (6) comporte un perçage (12) susceptible d'être relié au système à dépression, dispositif caractérisé en ce que l'élément de fixation (6) présente approximativement la forme d'une coupelle hémisphérique dont la partie supérieure est ouverte.

11. Dispositif selon la revendication 10, caractérisé en ce que la face inférieure de la coupelle hémisphérique constituant l'élément de fixation (6) présente une zone aplatie.

12. Dispositif selon la revendication 10 ou 11, caractérisé en ce que l'élément de fixation (6) est monté élastiquement au fond de la tête (4).

13. Dispositif selon l'une des revendications 10 à 12, caractérisé en ce que la face inférieure de l'élément de fixation (6) est articulée au fond de la tête (4) par au moins un ressort de traction (11).

14. Dispositif selon l'une des revendications 10 à 13, caractérisé par un joint (8) prévu sur le bord extérieur de la surface de l'élément de fixation (6) tournée vers la pièce (18).

15. Dispositif selon l'une des revendications 11 à 14, caractérisé en ce que la surface du fond de l'élément de fixation (6) comporte une tige (18) qui arrive sensiblement jusqu'au centre de la sphère.

16. Dispositif selon la revendication 15, caractérisé en ce que la tige (10) est portée de manière réglable en hauteur dans le fond de l'élément de fixation (6).

17. Dispositif selon la revendication 16, caractérisé en ce que l'extrémité supérieure de la tige (10) comporte un capteur de proximité.

18. Dispositif selon la revendication 15 ou 16, caractérisé en ce que la tige (10″) constitue en même temps un goujon d'assemblage.

19. Dispositif selon la revendication 15 ou 16, caractérisé en ce que l'extrémité supérieure de la tige (10) comporte une douille d'assemblage (20).

20. Dispositif selon l'une des revendications 10 à 18, caractérisé en ce que la goujon de support (3) est monté coulissant dans la direction verticale.

21. Dispositif selon la revendication 20, caractérisé en ce que le goujon de support (3) comporte un dispositif de réglage (15) automatique susceptible d'être commandé.

22. Dispositif selon la revendication 21, caractérisé en ce que le dispositif de réglage (15) comporte, en outre, un dispositif de mesure de la hauteur réglée.

**Claims**

1. A method of clamping workpieces (18), particularly workpieces of large area and thin wall thicknesses, the workpiece (18) to be machined being held by reduced-pressure clamp units (1), wherein clamping is effected with the method steps.

1) air cushions are produced by blowing gas or compressed air out of clamp units (1) at discrete supporting points.

2) the workpiece (19) to be clamped is pushed with a sliding action into the present position on the air cushions,

3) the workpiece (18) is lowered onto the clamp units (1) by switching off the compressed air,

4) the workpiece (18) is held on the clamp units (1) by means of reduced pressure.

2. A method as claimed in Claim 1, wherein in order to remove the workpiece (18), air cushions are again produced at the clamp units (1).

3. A method as claimed in Claim 1 or 2, wherein the workpiece (18) is additionally located in its machining position by locating pins (10).

4. A method as claimed in one of the Claims 1 to 3, particularly for clamping spherically preshaped sheet-metal parts of large format, wherein, before the introduction of the workpiece (18) to be machined, the clamp units (1) are so arranged that the coordinates of the theoretical supporting points formed by the clamp units (1) coincide with the structurally preset contour coordinates of the workpiece (18).

5. A method as claimed in Claim 4, wherein when the workpiece (18) is being introduced, the clamp elements (6) of the clamp units (1) automatically bear against the external contour of the workpiece (18).

6. A method as claimed in Claim 5, wherein the automatic alignment of the clamp elements (6) of the clamp units (1) is assisted by an air cushion in each case.

7. A method as claimed in one of the Claims 1 to 6, wherein a preliminary adjustment of the Z-coordinates of the clamp units (1) is effected by means of an automatic control.

8. A method as claimed in Claim 7, wherein a fine adjustment of the Z-coordinates of the clamp units (1) is additionally effected by means of proximity sensors after the introduction of the workpiece (18).

9. A method as claimed in one of the Claims 3 to 8, wherein the locating pins (10) are extended automatically.

10. A device for clamping workpieces (18), particularly workpieces of large area and thin wall thickness, in the form of a reduced-pressure clamp unit (1) which is adjustable in height and consists of a foot portion (2), a displaceably held supporting pin (3) and a head portion (4) which is mounted at the upper end of the supporting pin (3) and in which a clamp element (6) provided with a spherical seat is arranged for swinging movement and is pneumatically connected to a reduced-pressure system, wherein a compartment situated between the head portion (4) and the clamp element (6) is provided with a through bore (13) and the inner face, adjacent to the clamp element (6), of the head portion (4) comprises a bore (2) which can be connected to the reduced-pressure system, wherein the chucking element (6) has approximately the shape of a hemispherical bowl which is open upwards.

11. A device as claimed in Claim 10, wherein the under side of the hemispherical bowl forming the clamp element (6) has a flattened region.

12. A device as claimed in Claim 10 or 11, wherein the clamp element (6) is resiliently held in the bottom of the head portion (4).

13. A device as claimed in one of the Claims 10 to 12, wherein the under side of the clamp element (6) is articulated in the bottom of the head portion (4) by means of at least one tension spring (11).

14. A device as claimed in one of the Claims 10 to 13, wherein a seal (8) is fitted to the outer edge of the face of the clamp element (6) adjacent to the workpiece (18).

15. A device as claimed in one of the Claims 11 to 14, wherein a pin (10), which extends substantially as far as the centre of the sphere, is mounted in the bottom surface of the clamp element (6).

16. A device as claimed in Claim 15, wherein the pin (10) is adjustable in height in the bottom of the clamp element (6).

17. A device as claimed in Claim 16, wherein the pin (10) is provided with a proximity sensor at its upper end.

18. A device as claimed in Claim 15 or 16, wherein the pin (10") is simultaneously constructed in the form of a locating pin.

19. A device as claimed in Claim 15 or 16, wherein the pin (10') is provided with a fitting bush (20) at its upper end.

20. A device as claimed in one of the Claims 10 to 18, wherein the supporting pin (3) is held for displacement in the vertical direction.

21. A device as claimed in Claim 20, wherein a controllable automatic adjusting device (15) is associated with the supporting pin (3).

22. A device as claimed in Claim 21, wherein the adjusting device (15) is additionally provided with a device for measuring the particular height set.

Fig. 1a

Fig. 1b

Fig. 1

Fig. 2